# EUROPÄISCHE PATENTSCHRIFT

(11) **EP 3 039 843 B1**
(45) Veröffentlichungstag und Bekanntmachung des Hinweises auf die Patenterteilung: **11.01.2023**
(21) Anmeldenummer: 14747539.6
(22) Anmeldetag: 15.07.2014
(51) Int. Cl.: H04W 4/02, H04L 9/40

(54) **FILTERVERFAHREN ZUR ANPASSUNG EINER RECHENLAST**
FILTER METHOD FOR ADAPTING A COMPUTING LOAD
PROCÉDÉ DE FILTRAGE POUR ADAPTER UNE CHARGE DE CALCUL

(30) Priorität: 26.08.2013 DE 102013216962
(43) Veröffentlichungstag der Anmeldung: 06.07.2016
(73) Patentinhaber: Continental Automotive Technologies GmbH, 30165 Hannover (DE)
(72) Erfinder: SCHERPING, Richard, 65835 Liederbach am Taunus (DE); STÄHLIN, Ulrich, 65760 Eschborn (DE); MENZEL, Marc, 35096 Weimar (Lahn) (DE)
(74) Vertreter: Continental Corporation
(86) Internationale Anmeldenummer: PCT/EP2014/065175
(87) Internationale Veröffentlichungsnummer: WO 2015/028194

(56) Entgegenhaltungen:
- EP-A1- 2 288 190
- DE-A1- 19 755 129
- DE-A1-102010 002 883
- DE-A1-102010 046 843
- US-A1- 2007 280 114
- US-A1- 2011 140 968
- US-A1- 2013 035 051

## Beschreibung

Die Erfindung betrifft ein Filterverfahren und Filtervorrichtung zur Anpassung einer Rechenlast.

Im Stand der Technik sind sogenannte Fahrzeug-zu-X-Kommunikationssysteme bekannt, die sowohl zur Übertragung verkehrsbezogener Daten als auch verschiedener Service-Daten, wie etwa Unterhaltungsanwendungen, ausgebildet sind. Die Fahrzeug-zu-X-Kommunikation basiert dabei sowohl auf dem Datenaustausch zwischen Fahrzeugen untereinander (Fahrzeug-zu-Fahrzeug-Kommunikation) als auch auf dem Datenaustausch zwischen Fahrzeugen und Infrastruktureinrichtungen (Fahrzeug-zu-Infrastruktur-Kommunikation).

Aufgrund der hohen Anforderungen an die Zuverlässigkeit und Datensicherheit von mittels Fahrzeug-zu-X-Kommunikation übertragenen Informationen, werden derartige Informationen zusätzlich oftmals mit einer aufwändigen Sicherheitssignatur bzw. Datenverschlüsselung versehen.

Die Auswertung einer derartigen Sicherheitssignatur bzw. die Decodierung einer derartigen Datenverschlüsselung sind jedoch mit verhältnismäßig hohem Rechenaufwand verbunden. Hinzu kommt das Auftreten besonderer Situationen, wie etwa das Passieren einer vielbefahrenen innerstädtischen Kreuzung zur Hauptverkehrszeit, in denen eine derart große Anzahl an Fahrzeug-zu-X-Botschaften empfangen wird, dass eine Verarbeitung aller empfangenen Fahrzeug-zu-X-Botschaften ebenfalls nur durch das Bereitstellen einer vergleichsweise großen Rechenleistung möglich ist.

Im Gegensatz zu klassischen Umfeldsensoren, bei welchen die Menge an zu verarbeitenden Daten durch die Auslegung des Messwandlers vorgegeben ist und Hard- und Software der Verarbeitungsschritte entsprechend auf diese weitgehend konstant anliegende Datenmenge angepasst werden können, hängt bei einem Fahrzeug-zu-X-Kommunikationssystem die Datenmenge von ei ner Vielzahl von Faktoren ab, wie der Ausstattungsrate anderer Fahrzeuge und Infrastruktur, der Fahrzeugdichte usw., und reicht von null Nachrichten pro Sekunde (Fahrt über eine einsame Landstraße) bis zum theoretischen physikalischen Maximum von u.U. mehreren tausend Nachrichten pro Sekunde (ca. 1000 bei Betrachtung eines aktuell vorgesehenen Kanals, ITS-G5 CCH mit 6 MBit/s brutto).

Hard- und Software eines Fahrzeug-zu-X-Kommunikationssystems müssen daher auf eine sinnvolle Datenmenge ausgelegt werden. Aktuell werden hierbei Zahlen aus vermutlich realistischen Szenarien errechnet, z.B. 400 Nachrichten pro Sekunde. Das Verhalten des Systems bei größeren Datenmengen ist hingegen undefiniert.

Der Art nach verwandte Filterverfahren zur Anpassung einer Rechenlast an eine Rechenkapazität eines Fahrzeug-zu-X-Kommunikationssystems bzw. zur Reduzierung von durch ein Fahrzeug-zu-X-Kommunikationssystem auszuwertenden Nachrichten werden ebenfalls in den Druckschriften US 2011/140968 A1, EP 2 288 190 A1 und DE 10 2010 046 843 A1, DE 10 2010 002 883 A1 beschrieben.

Es ist die Aufgabe der Erfindung, eine Anpassung der Rechenlast and die Rechenkapazität eines Fahrzeug-zu-X Kommunikationssystems zu ermöglichen.

Zur Aussortierung von Botschaften können unterschiedliche Vorverarbeitungsverfahren eingesetzt werden, die unter allen empfangenen Fahrzeug-zu-X-Botschaften eine Auswahl der zu verarbeitenden Fahrzeug-zu-X-Botschaften treffen und einen Teil der empfangenen Fahrzeug-zu-X-Botschaften aussortieren.

Zudem besteht die Möglichkeit, neben einem vollständigen Bearbeiten und/oder Aussortieren weitere Abstufungen vorzusehen, wie beispielsweise eine Verarbeitung ohne/mit Überprüfung einer Signatur, eine Behandlung nur in einer Netzwerk und/oder Transport-Schicht, und/oder eine Nicht-Behandlung in bestimmten Einrichtungen oder Facilities. Dadurch kann eine feingranulare Anpassung und/oder Reduktion der Rechenzeit erreicht werden.

Gemäß einem ersten Aspekt betrifft die Erfindung ein Filterverfahren zur Anpassung einer Rechenlast an eine Rechenkapazität eines Fahrzeug-zu-X-Kommunikationssystems, wobei mittels des Fahrzeug-zu-X-Kommunikationssystems Fahrzeug-zu-X-Botschaften empfangen und/oder versendet werden, und wobei die empfangenen Fahrzeug-zu-X-Botschaften eine Verarbeitung durch das Fahrzeug-zu-X-Kommunikationssystem fordern, und wobei das Filterverfahren entscheidet, welche der empfangenen Fahrzeug-zu-X-Botschaften verarbeitet und welche der empfangenen Fahrzeug-zu-X-Botschaften verworfen werden. Dadurch wird der Vorteil erreicht, dass die Anzahl von zu verarbeitenden Fahrzeug-zu-X-Botschaften begrenzt werden kann. Somit wird eine Anpassung der Rechenlast an die Rechenkapazität des Fahrzeug-zu-X-Kommunikationssystems realisiert.

Erfindungsgemäß beobachtet eine erste Stufe des Filterverfahrens Größen über einen vergleichsweise langen Zeitraum und wertet die Größen über den vergleichsweise langen Zeitraum statistisch aus. Dadurch wird der Vorteil erreicht, dass vergleichsweise langsame Veränderungen der Größen erfasst werden können.

Erfindungsgemäß beobachtet eine zweite Stufe des Filterverfahrens die Größen über einen vergleichsweise kurzen Zeitraum und wertet die Größen über den vergleichsweise kurzen Zeitraum statistisch aus. Dadurch wird der Vorteil erreicht, dass vergleichsweise schnelle Veränderungen der Größen erfasst werden können.

Erfindungsgemäß passt die erste Stufe Parameter der Filterung langfristig an. Dadurch wird der Vorteil erreicht, dass die Parameter der Filterung über einen langen Zeitraum angepasst werden können.

Erfindungsgemäß passt die zweite Stufe die Parameter der Filterung kurzfristig an. Dadurch wird der Vorteil erreicht, dass die Parameter der Filterung über einen kurzen Zeitraum angepasst werden können.

Erfindungsgemäß filtert das Filterverfahren nach den Parametern Empfangsfeldstärke, Art der Fahrzeug-zu-X-Botschaft, Datenrate, Datenvolumen, zeitliche Länge, Datencodierung, Absenderposition, Paketrate und/oder Time-to-Collision. Dadurch wird der Vorteil erreicht, dass das Filterverfahren effizient implementiert werden kann.

Erfindungsgemäß filtert das Filterverfahren situationsabhängig nach den Parametern. Dadurch wird der Vorteil erreicht, dass die Fahrzeug-zu-X-Botschaften in Abhängigkeit von internen oder externen Situationsbedingungen des Fahrzeugs und/oder des Fahrzeug-zu-X-Kommunikationssystems gefiltert werden können.

Erfindungsgemäß berücksichtigt das Filterverfahren für die Anpassung der Parameter die folgenden Größen:
- Prozessorlast,
- Anzahl der empfangenen Datenpakete,
- Eigene Geschwindigkeit eines Empfängerfahrzeugs,
- Geografische Daten, z.B. aus digitalen Karten,
- Ortsinformationen verbunden mit gelernten Datenmengen an dem aktuellen Ort des empfangenden Fahrzeug-zu-X-Kommunikationssystems, und/oder
- Informationen aus Umfeldsensoren, die auf die zu erwartenden Datenmenge schließen lassen.

Dadurch wird der Vorteil erreicht, dass die situationsabhängige Filterung oder Anpassung effizient durchgeführt werden kann.

Erfindungsgemäß ist das Filterverfahren zweistufig. Dadurch wird der Vorteil erreicht, dass zwei unterschiedliche Dynamiken bei der Filterung eingesetzt werden können.

Die Anpassung der Parameter des Filterverfahrens kann dabei zweistufig erfolgen. Die Filterung selbst kann eine mehrstufige Filterung sein.

Gemäß einer Ausführungsform addiert die zweite Stufe des Filterverfahrens eine zweite Anpassung zu einer ersten Anpassung der ersten Stufe hinzu oder verknüpft die zweite Anpassung mit der ersten Anpassung. Dadurch wird der Vorteil erreicht, dass sowohl eine langfristige Anpassung als auch eine kurzfristige Anpassung der Parameter realisiert werden kann.

Gemäß einer nicht beanspruchten Alternativlösung ersetzt die zweite Stufe des Filterverfahrens die Anpassung der ersten Stufe durch die Anpassungen der zweiten Stufe. Nach dem Ende der zweiten Anpassung werden wieder die ersten Anpassungen übernommen. Durch dieses Vorgehen wird eine einfachere Implementierung ermöglicht, da weniger Wechselwirkungen zwischen den beiden Anpassungsstufen abgeprüft werden.

Gemäß einer Ausführungsform umfasst das Filterverfahren ein Bestimmen einer zeitlichen Änderung einer Anzahl empfangener Fahrzeug-zu-X-Botschaften, wobei die zweite Stufe des Filterverfahrens die zweite Anpassung zu der ersten Anpassung der ersten Stufe hinzuaddiert oder die zweite Anpassung mit der ersten Anpassung verknüpft, falls die bestimmte zeitliche Änderung einen vorbestimmten Schwellwert überschreitet. Dadurch wird der Vorteil erreicht, dass bei Überschreiten des vorbestimmten Schwellwertes beispielsweise eine schnellere Anpassung der Parameter erfolgen kann.

Gemäß einer Ausführungsform umfassen die empfangenen Fahrzeug-zu-X-Botschaften einen Prioritätsindikator, und entscheidet das Filterverfahren auf Basis des Prioritätsindikators, welche der empfangenen Fahrzeug-zu-X-Botschaften verarbeitet und welche der empfangenen Fahrzeug-zu-X-Botschaften verworfen werden. Dadurch wird der Vorteil erreicht, dass die Filterung der Fahrzeug-zu-X-Botschaften effizient durchgeführt werden kann. Als Prioritätsindikator kann beispielsweise die sogenannte Traffic Class nach dem ETSI ITS-G5 Standard verwendet werden.

Gemäß einer Ausführungsform begrenzt das Filterverfahren eine Anzahl von zu verarbeitenden Fahrzeug-zu-X-Botschaften innerhalb einer vorbestimmten Zeitdauer auf eine vorbestimmte Anzahl. Dadurch wird der Vorteil erreicht, dass die Rechenlast effizient an die Rechenkapazität des Fahrzeug-zu-X-Kommunikationssystems angepasst werden kann.

Gemäß einem zweiten Aspekt betrifft die Erfindung eine Filtervorrichtung zur Anpassung einer Rechenlast an eine Rechenkapazität eines Fahrzeug-zu-X-Kommunikationssystems, ausgestaltet mittels des Fahrzeug-zu-X-Kommunikationssystems Fahrzeug-zu-X-Botschaften zu empfangen und/oder zu versenden, wobei die empfangenen Fahrzeug-zu-X-Botschaften eine Verarbeitung durch das Fahrzeug-zu-X-Kommunikationssystem fordern, und wobei die Filtervorrichtung zweistufig ausgestaltet ist und ausgestaltet ist zu entscheiden, welche der empfangenen Fahrzeug-zu-X-Botschaften verarbeitet und welche der empfangenen Fahrzeug-zu-X-Botschaften verworfen werden, wobei eine erste Stufe der Filtervorrichtung ausgebildet ist Größen über einen vergleichsweise langen Zeitraum zu beobachten und über den vergleichsweise langen Zeitraum statistisch auszuwerten und Parameter der Filterung langfristig anzupassen, und eine zweite Stufe der Filtervorrichtung ausgebildet ist die Größen über einen vergleichsweise kurzen Zeitraum zu beobachten und über den vergleichsweise kurzen Zeitraum statistisch auszuwerten und die Parameter der Filterung kurzfristig anzupassen, wobei die Filtervorrichtung ausgebildet ist nach den Parametern Empfangsfeldstärke, Art der Fahrzeug-zu-X-Botschaft, Datenrate, Datenvolumen, zeitliche Länge, Datencodierung, Absenderposition, Paketrate und/oder Time-to-Collision zu filtern und situationsabhängig nach den Parametern filtert, wobei für die Anpassung der Parameter die folgenden Größen berücksichtigt werden:
- Prozessorlast,
- Anzahl der empfangenen Datenpakete,
- Eigene Geschwindigkeit eines Empfängerfahrzeugs,
- Geografische Daten, z.B. aus digitalen Karten,
- Ortsinformationen verbunden mit gelernten Datenmengen an dem aktuellen Ort des empfangenden Fahrzeug-zu-X-Kommunikationssystems, und/oder
- Informationen aus Umfeldsensoren, die auf die zu erwartenden Datenmenge schließen lassen.

Dadurch wird der Vorteil erreicht, dass die Anzahl von zu verarbeitenden Fahrzeug-zu-X-Botschaften begrenzt werden kann. Somit wird eine Anpassung der Rechenlast an die Rechenkapazität des Fahrzeug-zu-X-Kommunikationssystems realisiert.

Das Filterverfahren kann mittels der Filtervorrichtung durchgeführt werden. Weitere Merkmale der Filtervorrichtung ergeben sich unmittelbar aus der Funktionalität des Filterverfahrens. Die Filtervorrichtung kann ein Teil des Fahrzeug-zu-X-Kommunikationssystems sein und/oder in das Fahrzeug-zu-X-Kommunikationssystem integriert sein.

Gemäß einem dritten Aspekt betrifft die Erfindung ein Computerprogramm mit einem Programmcode, wobei das Computerprogramm ausgebildet ist, das Filterverfahren auf einem Computer auszuführen. Dadurch wird der Vorteil erreicht, dass das Filterverfahren automatisiert und wiederholbar ausgeführt werden kann.

Das Fahrzeug-zu-X-Kommunikationssystem und/oder die Filtervorrichtung können programmtechnisch eingerichtet sein, um das Computerprogramm auszuführen.

Die Erfindung kann in Hardware und/oder Software realisiert werden.

Durch eine frühzeitige Filterung der Daten (beispielsweise zwischen Access Technologies und Network & Transport, d.h. zwischen der Botschaftsempfangs-Datenschicht und der Netzwerk- und Weiterführungsschicht) kann sichergestellt werden, dass die Datenmenge einen spezifizierten Wert nicht übersteigt. Die Degradation (d.h. der Verlust einiger Fahrzeug-zu-X-Botschaften oder Nachrichten) erfolgt dabei definiert und konfigurierbar, da die Filterung anhand einstellbarer Kriterien erfolgt.

Diese Kriterien basieren auf mit vergleichsweise geringem Rechenaufwand prüfbaren Eigenschaften einer Fahrzeug-zu-X-Botschaft und/oder eines Datenpakets, z.B.:
- Empfangsfeldstärke,
- Packet Type, Content Type, Content Subtype (d.h. Art der Fahrzeug-zu-X-Botschaft, Art des Inhalts der Fahrzeug-zu-X-Botschaft, Unterart des Inhalts der Fahrzeug-zu-X-Botschaft),
- Datenrate,
- Datenvolumen,
- Zeitliche Länge,
- Datencodierung, und/oder
- Absenderposition relativ zu einem rechteckigen Gebiet um das eigene Fahrzeug herum.

Die verbleibenden Fahrzeug-zu-X-Botschaften oder Datenpakete können dann mit aufwändigeren Verfahren weiter gefiltert werden, z.B.:
- Datenpaketrate (auch bekannt als sogenannte Inbound Rate Control), und/oder
- TTC (Time-to-Collision, d.h. Zeit bis zum Zusammentreffen mit einem Sender der Fahrzeug-zu-X-Botschaft).

Die Filterung kann ferner auf Basis eines Prioritätsindikators erfolgen, welcher in die Fahrzeug-zu-X-Botschaften oder Datenpakete eingebettet sein kann. Als Prioritätsindikator kann beispielsweise die sogenannte Traffic Class nach dem ETSI ITS-G5 Standard verwendet werden.

Eine Fahrzeug-zu-X-Botschaft umfasst in der Regel mehrere Datenpakete, die auch unterschiedliche Inhalte aufweisen können. Der Inhalt einer Fahrzeug-zu-X-Botschaft bzw. eines Datenpakets ist dabei der Dateninhalt, d.h. die durch die Daten beschriebenen Informationen. Die Fahrzeug-zu-X-Botschaft kann beispielsweise eine Cooperative Awareness Message (CAM) oder eine Decentralized Environmental Notification Message (DENM) nach dem ETSI ITS-G5 Standard sein.

Durch die Filterung wird bevorzugt ein sogenannter Rückfall-oder Failsafe-Mechanismus für die Überlastsituation geschaffen, die einen Weiterbetrieb des Systems auch in der Überlastsituation ermöglicht. Dies erlaubt weiterhin auch die sinnvolle Reaktion auf vorsätzliche Attacken (z.B. sogenannter Denial of Service) sowie fehlerhafte Sender (z.B. sogenannter Bubbeling Idiot).

Die Filterung kann dabei bevorzugt so ausgelegt werden, dass jeweils mit konstanten Parametern gefiltert wird, also beispielsweise immer Fahrzeug-zu-X-Botschaft eines bestimmten Packettyps verworfen werden oder nur Fahrzeug-zu-X-Botschaften unterhalb einer gewissen Distanz an die entsprechenden Fahrzeuganwendungen weitergeführt werden.

Besonders bevorzugt ist weiterhin eine adaptive Anpassung der Filterparameter, so dass die Anzahl der weitergeführten Datenpakete möglichst konstant bleibt. Dies kann z.B. erreicht werden, indem konstant beobachtet wird, wie viele Fahrzeug-zu-X-Botschaften oder Datenpakete eingehen. Sobald diese Anzahl sich der Anzahl der maximal verarbeitbaren Fahrzeug-zu-X-Botschaften oder Datenpakete nähert, werden die Filterparameter so verändert, dass immer mehr Fahrzeug-zu-X-Botschaften oder Datenpakete verworfen werden. Sinkt die Anzahl der empfangenen Fahrzeug-zu-X-Botschaften oder Datenpakete wieder, so werden die Filter wieder "aufgeweitet". Für dieses Vorgehen kann eine Vielzahl von an sich bekannten anwendbaren Algorithmen mit unterschiedlichen Vor- und Nachteilen eingesetzt werden.

Um auch einen plötzlichen Anstieg an Fahrzeug-zu-X-Botschaften oder Datenpaketen verarbeiten zu können, ist es vorteilhafterweise vorgesehen, die Anpassung der Parameter mit zwei unterschiedlichen Dynamiken durchzuführen. Eine erste langsame Anpassung sorgt für eine kontinuierliche Anpassung an die Situation, wie sie im Mittel herrscht. Eine zweite schnelle Anpassung sorgt (vergleichbar einem Rückschlagventil) dafür, dass bei sehr schnellen Änderungen der Anzahl der Fahrzeug-zu-X-Botschaften oder Datenpakete die Parameter entsprechend schnell angepasst werden. Diese zweiten Anpassungen werden aber auch vergleichsweise schnell wieder zurückgenommen. Für die schnelle Anpassung werden bevorzugt Methoden angewandt, die ohne viel Rechenleistung auskommen (z.B. aus der oben genannten Auflistung). Ganz besonders bevorzugt wird für die Auslösung der zweiten schnellen Anpassung ein Schwellwert der Änderung überschritten, um zu hektische Anpassungen zu vermeiden.

Als Steuerungs- bzw. Regelungs- bzw. Adaptionsgröße der dynamischen Anpassung sind bevorzugt folgende Größen vorgesehen:
- Prozessorlast,
- Anzahl der empfangenen Fahrzeug-zu-X-Botschaften oder Datenpakete,
- Eigene Geschwindigkeit (bei größerer Geschwindigkeit ist mit schnelleren Änderungen zu rechnen als bei kleinerer),
- Geografische Daten, z.B. aus digitalen Karten (daraus kann abgeleitet werden, ob in einem Gebiet mit großen Datenmengen zu rechnen ist oder nicht),
- Ortsinformationen verbunden mit gelernten Datenmengen an diesem Ort, und/oder
- Informationen aus Umfeldsensoren, die auf die zu erwartenden Datenmenge schließen lassen, wie beispielsweise die aktuelle Maximalreichweite eines Radars oder die Anzahl der erkannten Objekte in der Umgebung.

Die genannten Größen oder Parameter werden insbesondere bevorzugt jeweils pro vorgegebener Zeiteinheit erfasst oder die Parameter angepasst. Die entsprechenden Werte der Größen oder Parameter werden dabei beispielsweise über einen kurzen Zeitraum für die zweite schnelle Anpassung der Parameter ermittelt und über einen längeren Zeitraum für die erste langsamere Anpassung der Parameter ermittelt.

Die Erfindung führt somit zu dem Vorteil, dass der vollständige sogenannte Kommunikationsstack auf eine weitgehend vorhersehbare maximale Rechenlast ausgelegt werden kann, dabei aber auch in Überlastsituationen geordnet funktionsfähig bleibt. Die die Filterung ausführende Filterungsschicht kann vergleichsweise leicht mittels der aus dem Stand der Technik bekannten Verfahren zu einer Vorverarbeitung ausgebaut werden, die eine Klassifikation und Plausibilisierung durchführt. Die Klassifikation kann beispielsweise eine empfangene Fahrzeug-zu-X-Botschaft und/oder ein empfangenes Datenpaket als kritisch, relevant oder irrelevant für eine weitere Verarbeitung klassifizieren. Die Plausibilisierung kann beispielsweise eine empfangene Fahrzeug-zu-X-Botschaft und/oder ein empfangenes Datenpaket hinsichtlich mehrerer Filterparameter auf Plausibilität oder Schlüssigkeit prüfen.

Weitere bevorzugte Ausführungsformen ergeben sich aus den Unteransprüchen und der nachfolgenden Beschreibung von Ausführungsbeispielen an Hand von Figuren.

Es zeigen:
- Fig. 1: beispielhaft einen möglichen Ablauf eines Filterverfahrens in Form eines Flussdiagramms; und
- Fig. 2: beispielhaft ein Fahrzeug-zu-X-Kommunikationssystem mit einer Filtervorrichtung.

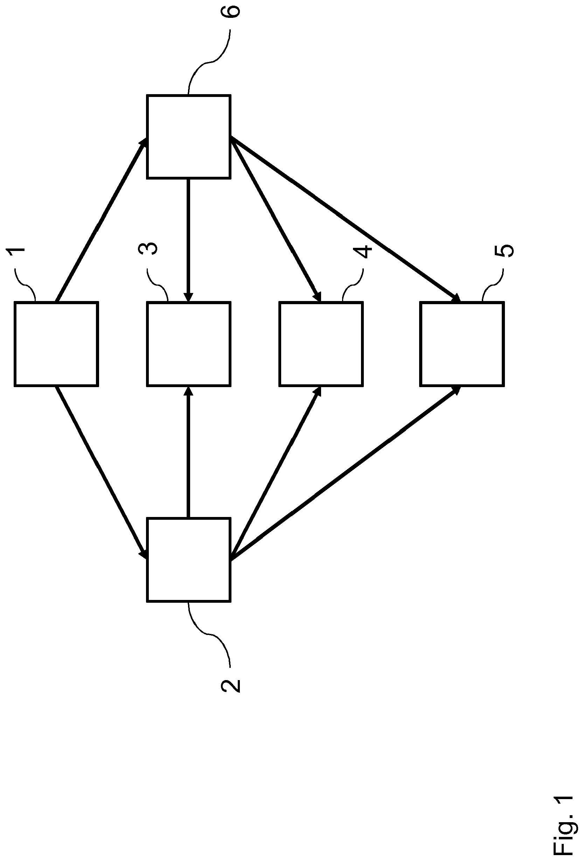

Fig. 1 zeigt beispielhaft einen möglichen Ablauf eines Filterverfahrens in Form eines Flussdiagramms.

In Verfahrensschritt 1 wird in Zeiteinheiten von 0,5 s der jeweilige Ist-Zustand hinsichtlich der Prozessorauslastung bzw. der Rechenlast des Fahrzeug-zu-X-Kommunikationssystems bestimmt, die Anzahl der empfangenen Fahrzeug-zu-X-Botschaften bestimmt, die eigene Geschwindigkeit des Empfängerfahrzeugs bestimmt, die geographischen Daten aus einer digitalen Karte bestimmt, Ortsinformationen in Verbindung mit einer gelernten Anzahl von empfangenen Fahrzeug-zu-X-Botschaften an diesem Ort aus einem digitalen Speicher abgerufen und/oder Informationen von Fahrzeugumfeldsensoren ausgewertet, die auf die zu erwartende Anzahl von zu empfangenden Fahrzeug-zu-X-Botschaften am aktuellen Ort schließen lassen.

In Schritt 2 wird eine erste und vergleichsweise langsame Anpassung der Parameter eines Botschaftsfilterverfahrens ausgeführt, welches die Anzahl der zu verarbeitenden empfangenen Fahrzeug-zu-X-Botschaften in einem Rahmen hält, der durchschnittlich nicht die vorhandene Rechenkapazität übersteigt. Der von der ersten Anpassung überwachte Zeitraum, über welchen in diesem Fall gemittelt wird, beträgt 2 h. Es sei angemerkt, dass dieser Zeitraum auch deutlich länger oder kürzer sein kann, etwa von 5 min bis hin zu 12 h.

Gemäß einer Ausführungsform wird ein Mittelwert von 5 Minuten verwendet, welcher beispielsweise bis zu 1 Minute nach unten und bis zu 1 h nach oben angepasst werden kann.

Im folgenden Schritt 3 erfolgt nun eine Anpassung eines Schwellenwerts der Empfangsfeldstärke, bei dessen Unterschreiten empfangene Fahrzeug-zu-X-Botschaften ohne weitere Verarbeitung verworfen werden.

In Schritt 4 wird die Art von Fahrzeug-zu-X-Botschaften neu festgelegt, die ohne weitere Verarbeitung verworfen werden. Dabei werden bei hoher Auslastung zunehmend wichtigere Arten von Botschaften verworfen. Dennoch wird darauf geachtet, dass eine Verarbeitung von als relevant gekennzeichneten Fahrzeug-zu-X-Botschaften in jedem Fall erfolgt.

In Schritt 5 nun wird die Größe eines um das Empfangsfahrzeug gelegten Rechtecks angepasst, wobei das Rechteck Koordinaten umfasst, von denen gesendete Fahrzeug-zu-X-Botschaften verarbeitet werden. Fahrzeug-zu-X-Botschaften, deren Absender außerhalb des Rechtecks ist, werden hingegen ohne weitere Verarbeitung verworfen.

In Verfahrensschritt 6 wird zeitgleich zur ersten Anpassung in Schritt 2 eine zweite, vergleichsweise schnelle Anpassung ausgeführt. Die zweite Anpassung überwacht im Gegensatz zur ersten Anpassung nur einen Zeitraum von 2 s und nimmt auf Basis der in diesem Zeitraum beobachteten Werte aus Schritt 1 eine Anpassung in den Schritten 3, 4 und 5 vor, analog zur ersten Anpassung. Die zweite Anpassung ist somit deutlich kurzfristiger als die erste Anpassung und addiert ihre Vorgaben bzw. Anpassungen auf die Vorgaben bzw. Anpassungen der ersten Anpassung. Gemäß einer Ausführungsform wird die zweite Anpassung mit der ersten Anpassung verknüpft.

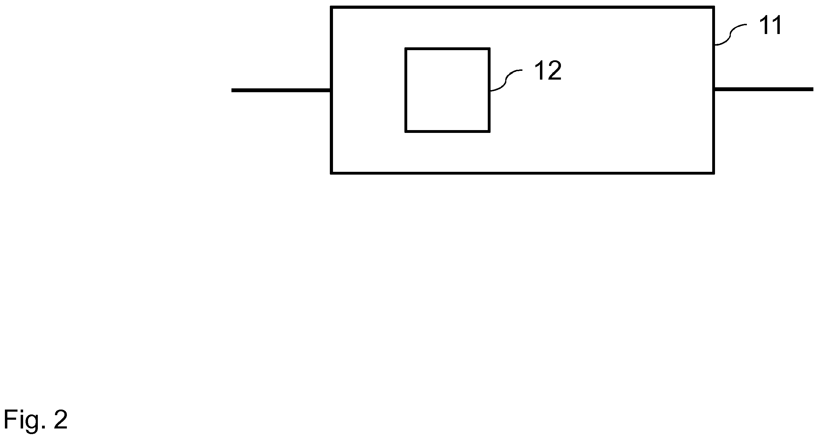

Fig. 2 zeigt beispielhaft ein Fahrzeug-zu-X-Kommunikationssystem 11 mit einer Filtervorrichtung 12. Die Filtervorrichtung 12 ist zur Anpassung einer Rechenlast an eine Rechenkapazität des Fahrzeug-zu-X-Kommunikationssystems 11 vorgesehen.

Mittels des Fahrzeug-zu-X-Kommunikationssystems 11 können Fahrzeug-zu-X-Botschaften empfangen und/oder versendet werden, wobei die empfangenen Fahrzeug-zu-X-Botschaften eine Verarbeitung durch das Fahrzeug-zu-X-Kommunikationssystem 11 fordern. Die Filtervorrichtung 12 ist ausgebildet zu entscheiden, welche der empfangenen Fahrzeug-zu-X-Botschaften verarbeitet und welche der empfangenen Fahrzeug-zu-X-Botschaften verworfen werden.

Die Filtervorrichtung 12 kann ein Teil des Fahrzeug-zu-X-Kommunikationssystems 11 sein und/oder in das Fahrzeug-zu-X-Kommunikationssystem 11 integriert sein.

Die Erfindung betrifft ein Filterverfahren zur Anpassung einer Rechenlast an eine Rechenkapazität eines Fahrzeug-zu-X-Kommunikationssystems, wobei mittels des Fahrzeug-zu-X-Kommunikationssystems Fahrzeug-zu-X-Botschaften empfangen und/oder versendet werden, wobei die empfangenen Fahrzeug-zu-X-Botschaften eine Verarbeitung durch das Fahrzeug-zu-X-Kommunikationssystem fordert, und wobei das Filterverfahren entscheidet, welche der empfangenen Fahrzeug-zu-X-Botschaften verarbeitet und welche der empfangenen Fahrzeug-zu-X-Botschaften verworfen werden.

Erfindungsgemäß filtert das Filterverfahren nach den Parametern Empfangsfeldstärke, Art der Fahrzeug-zu-X-Botschaft, Absenderposition, Paketrate und/oder Time-to-Collision.

Erfindungsgemäß filtert das Filterverfahren situationsabhängig nach den Parametern.

Erfindungsgemäß berücksichtigt das Filterverfahren zur situationsabhängigen Anpassung der Parameter die folgenden Größen:
- Prozessorlast,
- Anzahl der empfangenen Datenpakete,
- Eigene Geschwindigkeit eines Empfängerfahrzeugs (bei größerer Geschwindigkeit ist mit schnelleren Änderungen zu rechnen als bei kleinerer),
- Geografische Daten, z.B. aus digitalen Karten (daraus kann abgeleitet werden, ob in einem Gebiet mit großen Datenmengen zu rechnen ist oder nicht),
- Ortsinformationen verbunden mit gelernten Datenmengen an dem aktuellen Ort des Fahrzeug-zu-X-Kommunikationssystems und
- Informationen aus Umfeldsensoren, die auf die zu erwartenden Datenmenge schließen lassen, wie beispielsweise die aktuelle Maximalreichweite eines Radars oder die Anzahl der erkannten Objekte in der Umgebung.

Erfindungsgemäß ist das Filterverfahren zweistufig.

Erfindungsgemäß beobachtet eine erste Stufe des Filterverfahrens die Parameter über einen vergleichsweise langen Zeitraum und wertet die Parameter über den vergleichsweise langen Zeitraum statistisch aus.

Erfindungsgemäß beobachtet eine zweite Stufe des Filterverfahrens die Parameter über einen vergleichsweise kurzen Zeitraum und wertet die Parameter über den vergleichsweise kurzen Zeitraum statistisch aus.

Erfindungsgemäß passt die erste Stufe die Parameter langfristig an.

Erfindungsgemäß passt die zweite Stufe die Parameter kurzfristig an.

Gemäß einer Ausführungsform addiert die zweite Stufe des Filterverfahrens eine zweite Anpassung zu einer ersten Anpassung der ersten Stufe hinzu.

Gemäß einer nicht beanspruchten Alternativlösung ersetzt eine zweite Stufe des Filterverfahrens eine erste Anpassung der ersten Stufe durch eine zweite Anpassung.

## Patentansprüche

1. Filterverfahren zur Anpassung einer Rechenlast an eine Rechenkapazität eines Fahrzeug-zu-X-Kommunikationssystems (11), wobei mittels des Fahrzeug-zu-X-Kommunikationssystems (11) Fahrzeug-zu-X-Botschaften empfangen und/oder versendet werden, und wobei die empfangenen Fahrzeug-zu-X-Botschaften eine Verarbeitung durch das Fahrzeug-zu-X-Kommunikationssystem (11) fordern, wobei
das Filterverfahren zweistufig ist und entscheidet, welche der empfangenen Fahrzeug-zu-X-Botschaften verarbeitet und welche der empfangenen Fahrzeug-zu-X-Botschaften verworfen werden, **dadurch gekennzeichnet,**
**dass** eine erste Stufe des Filterverfahrens Größen über einen vergleichsweise langen Zeitraum beobachtet und über den vergleichsweise langen Zeitraum statistisch auswertet und Parameter der Filterung langfristig anpasst, und eine zweite Stufe des Filterverfahrens die Größen über einen vergleichsweise kurzen Zeitraum beobachtet und über den vergleichsweise kurzen Zeitraum statistisch auswertet und die Parameter der Filterung kurzfristig anpasst, wobei
das Filterverfahren nach den Parametern Empfangsfeldstärke, Art der Fahrzeug-zu-X-Botschaft, Datenrate, Datenvolumen, zeitliche Länge, Datencodierung, Absenderposition, Paketrate und/oder Time-to-Collision filtert und das Filterverfahren situationsabhängig nach den Parametern filtert, wobei für die Anpassung der Parameter die folgenden Größen berücksichtigt werden:
- Prozessorlast,
- Anzahl der empfangenen Datenpakete,
- Eigene Geschwindigkeit eines Empfängerfahrzeugs,
- Geografische Daten, z.B. aus digitalen Karten,
- Ortsinformationen verbunden mit gelernten Datenmengen an dem aktuellen Ort des empfangenden Fahrzeug-zu-X-Kommunikationssystems, und/oder
- Informationen aus Umfeldsensoren, die auf die zu erwartenden Datenmenge schließen lassen.

2. Filterverfahren nach Anspruch 1,
**dadurch gekennzeichnet,**
**dass** die zweite Stufe des Filterverfahrens eine zweite Anpassung der Parameter zu einer ersten Anpassung der Parameter der ersten Stufe hinzuaddiert oder die zweite Anpassung der Parameter mit der ersten Anpassung der Parameter verknüpft.

3. Filterverfahren nach Anspruch 2,
**dadurch gekennzeichnet,**
**dass** das Filterverfahren ein Bestimmen einer zeitlichen Änderung einer Anzahl empfangener Fahrzeug-zu-X-Botschaften umfasst und, falls die bestimmte zeitliche Änderung einen vorbestimmten Schwellwert überschreitet, die zweite Stufe des Filterverfahrens die zweite Anpassung zu der ersten Anpassung der ersten Stufe hinzuaddiert oder die zweite Anpassung mit der ersten Anpassung verknüpft.

4. Filterverfahren nach einem der Ansprüche 1 bis 3,
**dadurch gekennzeichnet,**
**dass** die empfangenen Fahrzeug-zu-X-Botschaften einen Prioritätsindikator umfassen, und das Filterverfahren auf Basis des Prioritätsindikators entscheidet, welche der empfangenen Fahrzeug-zu-X-Botschaften verarbeitet und welche der empfangenen Fahrzeug-zu-X-Botschaften verworfen werden.

5. Filterverfahren nach einem der Ansprüche 1 bis 4,
**dadurch gekennzeichnet,**
**dass** das Filterverfahren eine Anzahl von zu verarbeitenden Fahrzeug-zu-X-Botschaften innerhalb einer vorbestimmten Zeitdauer auf eine vorbestimmte Anzahl begrenzt.

6. Filtervorrichtung (12) zur Anpassung einer Rechenlast an eine Rechenkapazität eines Fahrzeug-zu-X-Kommunikationssystems (11), ausgestaltet mittels des Fahrzeug-zu-X-Kommunikationssystems (11) Fahrzeug-zu-X-Botschaften zu empfangen und/oder zu versenden, wobei die empfangenen Fahrzeug-zu-X-Botschaften eine Verarbeitung durch das Fahrzeug-zu-X-Kommunikationssystem (11) fordern, wobei die Filtervorrichtung (12) zweistufig ausgestaltet ist und ausgestaltet ist zu entscheiden, welche der empfangenen Fahrzeug-zu-X-Botschaften verarbeitet und welche der empfangenen Fahrzeug-zu-X-Botschaften verworfen werden, **dadurch gekennzeichnet,**
**dass** eine erste Stufe der Filtervorrichtung ausgebildet ist Größen über einen vergleichsweise langen Zeitraum zu beobachten und über den vergleichsweise langen Zeitraum statistisch auszuwerten und Parameter der Filterung langfristig anzupassen, und eine zweite Stufe der Filtervorrichtung ausgebildet ist die Größen über einen vergleichsweise kurzen Zeitraum zu beobachten und über den vergleichsweise kurzen Zeitraum statistisch auszuwerten und die Parameter der Filterung kurzfristig anzupassen, wobei
die Filtervorrichtung ausgebildet ist nach den Parametern Empfangsfeldstärke, Art der Fahrzeug-zu-X-Botschaft, Datenrate, Datenvolumen, zeitliche Länge, Datencodierung, Absenderposition, Paketrate und/oder Time-to-Collision zu filtern und situationsabhängig nach den Parametern zu filtern, wobei die Filtervorrichtung ausgebildet ist, für
die Anpassung der Parameter die folgenden Größen zu berücksichtigen:
- Prozessorlast,
- Anzahl der empfangenen Datenpakete,
- Eigene Geschwindigkeit eines Empfängerfahrzeugs,
- Geografische Daten, z.B. aus digitalen Karten,
- Ortsinformationen verbunden mit gelernten Datenmengen an dem aktuellen Ort des empfangenden Fahrzeug-zu-X-Kommunikationssystems, und/oder
- Informationen aus Umfeldsensoren, die auf die zu erwartenden Datenmenge schließen lassen.

7. Computerprogramm mit einem Programmcode,
**dadurch gekennzeichnet,**
**dass** das Computerprogramm ausgebildet ist, das Filterverfahren nach einem der Ansprüche 1 bis 5 auf einem Computer auszuführen.

## Claims

1. Filter method for adjusting a computing load to a computing capacity of a vehicle-to-X communication system (11), wherein the vehicle-to-X communication system (11) is used to receive and/or send vehicle-to-X messages, and wherein the received vehicle-to-X messages require processing by the vehicle-to-X communication system (11), wherein
the filter method has two stages and decides which of the received vehicle-to-X messages are processed and which of the received vehicle-to-X messages are discarded, **characterized in that**
a first stage of the filter method monitors variables over a relatively long time period and statistically analyses same over said relatively long time period and adjusts the filtering parameters over the long term, and a second stage of the filter method monitors the variables over a relatively short time period and statistically analyses same over said relatively short time period and adjusts the filtering parameters over the short term, wherein
the filter method filters by the parameters receive field strength, type of vehicle-to-X message, data rate, data volume, time length, data encoding, sender position, packet rate and/or time-to-collision, and the filter method filters by the parameters according to the situation, wherein the following variables are taken into account in order to adjust the parameters:
- processor load,
- number of received data packets,
- own speed of a receiver vehicle,
- geographical data, e.g. from digital maps,
- location information associated with learned amounts of data at the current location of the receiving vehicle-to-X communication system, and/or
- information from surround sensors, from which the amount of data to be expected can be deduced.

2. Filter method according to Claim 1,
**characterized in that**
the second stage of the filter method adds a second adjustment of the parameters to a first adjustment of the parameters of the first stage, or combines the second adjustment of the parameters with the first adjustment of the parameters.

3. Filter method according to Claim 2,
**characterized in that**
the filter method comprises determining a change over time in a number of received vehicle-to-X messages, and the second stage of the filter method adds the second adjustment to the first adjustment of the first stage or combines the second adjustment with the first adjustment if the determined change over time exceeds a predetermined threshold value.

4. Filter method according to any of Claims 1 to 3,
**characterized in that**
the received vehicle-to-X messages comprise a priority indicator, and the filter method decides, on the basis of the priority indicator, which of the received vehicle-to-X messages are processed and which of the received vehicle-to-X messages are discarded.

5. Filter method according to any of Claims 1 to 4,
**characterized in that**
the filter method limits a number of vehicle-to-X messages to be processed within a predetermined time period to a predetermined number.

6. Filter device (12) for adjusting a computing load to a computing capacity of a vehicle-to-X communication system (11), configured by means of the vehicle-to-X communication system (11) to receive and/or send vehicle-to-X messages,
wherein the received vehicle-to-X messages require processing by the vehicle-to-X communication system (11), wherein the filter device (12) has two stages and is configured to decide which of the received vehicle-to-X messages are processed and which of the received vehicle-to-X messages are discarded, **characterized in that**
a first stage of the filter device is designed to monitor variables over a relatively long time period and to statistically analyse same over said relatively long time period and to adjust the filtering parameters over the long term, and a second stage of the filter device is designed to monitor the variables over a relatively short time period and to statistically analyse same over said relatively short time period and to adjust the filtering parameters over the short term, wherein
the filter device is designed to filter by the parameters receive field strength, type of vehicle-to-X message, data rate, data volume, time length, data encoding, sender position, packet rate and/or time-to-collision and to filter by the parameters according to the situation, wherein the filter device is designed to take into account the following variables in order to adjust the parameters:
- processor load,
- number of received data packets,
- own speed of a receiver vehicle,
- geographical data, e.g. from digital maps,
- location information associated with learned amounts of data at the current location of the receiving vehicle-to-X communication system, and/or
- information from surround sensors, from which the amount of data to be expected can be deduced.

7. Computer program containing a program code,
**characterized in that**
the computer program is designed to execute the filter method according to any of Claims 1 to 5 on a computer.

## Revendications

1. Procédé de filtrage permettant d'adapter une charge de calcul à une capacité de calcul d'un système de communication de véhicule à X (11), dans lequel des messages de véhicule à X sont reçus et/ou envoyés au moyen du système de communication de véhicule à X (11), et dans lequel les messages de véhicule à X reçus demandent un traitement par le système de communication de véhicule à X (11), dans lequel
le procédé de filtrage est à deux étapes et décide lesquels des messages de véhicule à X reçus seraient traités et lesquels des messages de véhicule à X reçus seraient rejetés,
**caractérisé en ce qu'**une première étape du procédé de filtrage observe des grandeurs sur une période de temps relativement longue et les évalue statistiquement sur la période de temps relativement longue, et adapte des paramètres du filtrage à long terme, et une deuxième étape du procédé de filtrage observe les grandeurs sur une période de temps relativement courte et les évalue statistiquement sur la période de temps relativement courte et adapte les paramètres du filtrage à court terme, dans lequel
le procédé de filtrage filtre selon les paramètres de l'intensité de champ de réception, du type du message de véhicule à X, du débit de données, du volume de données, de la durée dans le temps, du codage des données, de la position de l'expéditeur, du débit de paquets, et/ou du temps restant avant la collision, et le procédé de filtrage filtre selon les paramètres en fonction de la situation, dans lequel les grandeurs suivantes sont prises en compte pour l'adaptation des paramètres :
- la charge du processeur,
- le nombre des paquets de données reçus,
- la vitesse propre d'un véhicule récepteur,
- des données géographiques, provenant par exemple de cartes numériques,
- des informations de lieu en conjonction avec des quantités de données apprises sur le lieu actuel du système de communication de véhicule à X récepteur, et/ou
- des informations provenant de capteurs d'environnement qui permettent de conclure à la quantité de données à attendre.

2. Procédé de filtrage selon la revendication 1, **caractérisé en ce que** la deuxième étape du procédé de filtrage additionne une deuxième adaptation des paramètres à une première adaptation des paramètres de la première étape ou associe la deuxième adaptation des paramètres à la première adaptation des paramètres.

3. Procédé de filtrage selon la revendication 2, **caractérisé en ce que** le procédé de filtrage comprend une détermination d'une variation dans le temps d'un nombre de messages de véhicule à X reçus, et si la variation dans le temps déterminée dépasse une valeur seuil prédéterminée, la deuxième étape du procédé de filtrage additionne la deuxième adaptation à la première adaptation de la première étape ou associe la deuxième adaptation à la première adaptation.

4. Procédé de filtrage selon l'une quelconque des revendications 1 à 3, **caractérisé en ce que** les messages de véhicule à X reçus comprennent un indicateur de priorité, et le procédé de filtrage décide sur la base de l'indicateur de priorité lesquels des messages de véhicule à X reçus seraient traités, et lesquels des messages de véhicule à X reçus seraient rejetés.

5. Procédé de filtrage selon l'une quelconque des revendications 1 à 4, **caractérisé en ce que** le procédé de filtrage limite un nombre de messages de véhicule à X à traiter pendant une durée prédéterminée à un nombre prédéterminé.

6. Dispositif de filtrage (12) permettant d'adapter une charge de calcul à une capacité de calcul d'un système de communication de véhicule à X (11), configuré pour recevoir et/ou envoyer des messages de véhicule à X au moyen du système de communication véhicule à X (11), dans lequel les messages de véhicule à X reçus demandent un traitement par le système de communication de véhicule à X (11), dans lequel le dispositif de filtrage (12) est configuré en deux étapes, et est configuré pour décider lesquels des messages de véhicule à X reçus seraient traités et lesquels des messages de véhicule à X reçus seraient rejetés,
**caractérisé en ce qu'**une première étape du dispositif de filtrage est réalisée pour observer des grandeurs sur une période de temps relativement longue et pour les évaluer statistiquement sur la période de temps relativement longue, et pour adapter des paramètres du filtrage à long terme, et une deuxième étape du dispositif de filtrage est réalisée pour observer les grandeurs pendant une période relativement courte et pour les évaluer statistiquement sur la période de temps relativement courte et pour adapter les paramètres du filtrage à court terme, dans lequel
le dispositif de filtrage est réalisé pour filtrer selon les paramètres de l'intensité de champ de réception, du type du message de véhicule à X, du débit de données, du volume de données, de la durée dans le temps, du codage des données, de la position de l'expéditeur, du débit de paquets, et/ou du temps restant avant la collision, et le procédé de filtrage filtre selon les paramètres en fonction de la situation, le dispositif de filtrage étant réalisé pour prendre en compte les grandeurs suivantes pour l'adaptation des paramètres :
- la charge du processeur,
- le nombre des paquets de données reçus,
- la vitesse propre d'un véhicule récepteur,
- des données géographiques provenant par exemple de cartes numériques,
- des informations de lieu en conjonction avec des quantités de données apprises sur le lieu actuel du système de communication de véhicule à X récepteur, et/ou
- des informations provenant de capteurs d'environnement qui permettent de conclure à la quantité de données à attendre.

7. Programme informatique comprenant du code programme, **caractérisé en ce que** le programme informatique est réalisé pour exécuter le procédé de filtrage selon l'une quelconque des revendications 1 à 5 sur un ordinateur.
